# EUROPÄISCHE PATENTSCHRIFT

(11) **EP 0 545 018 B1**
(45) Veröffentlichungstag und Bekanntmachung des Hinweises auf die Patenterteilung: **24.01.1996**
(21) Anmeldenummer: 92116795.3
(22) Anmeldetag: 01.10.1992
(51) Int. Cl.: C03B 7/06

(54) **Kanal für die Temperatureinstellung eines Stromes schmelzbarer Materialien**
Channel for regulating the temperature of a current of meltable material
Canal pour le réglage de la température d'un courant de matériau fusible

(30) Priorität: 05.12.1991 DE 4140104
(43) Veröffentlichungstag der Anmeldung: 09.06.1993
(73) Patentinhaber: Beteiligungen Sorg GmbH & Co. KG, D-97816 Lohr (DE)
(72) Erfinder:
(74) Vertreter: Schulze Horn, Stefan, Dipl.-Ing. M.Sc.

(56) Entgegenhaltungen:
- US-A- 1 900 362

## Beschreibung

Die Erfindung betrifft einen Kanal für die Temperatureinstellung eines Stromes schmelzbarer Materialien, insbesondere Glas oder keramische Materialien, wobei die Erwärmung durch in den Seitenwänden angebrachte Brenner und die Abkühlung durch über bewegliche Platten verschließbare Öffnungen in der Decke erfolgt.

Derartige Kanäle bzw. Speiser für Glasströme oder Mineralströme für z.B. der Herstellung von Steinwollen sind bekannt und haben sich seit langem bewährt. Die Bewegung der die Kühlöffnungen abdeckenden Platten erfolgt in Strömungslängsrichtung der durch die Kanäle fließenden Schmelze, so daß zwischen zwei benachbarten Öffnungen mindestens ein Abschnitt frei bleiben muß, der der Länge einer Platte, d.h. mindestens der Öffnungslänge entspricht. Die Kühlfläche ist dementsprechend stark begrenzt.

Nachteilig ist weiterhin, daß eine Unterstützung für die Platten in Deckenmitte geschaffen werden muß, d.h., daß eine aufwendige Stutzkonstruktion notwendig ist bzw. die Decke entsprechend stark ausgeführt werden muß.

Aus der US-A-1 900 362 ist es bekannt, daß ein längsverlaufender Schlitz bzw. längsverlaufende Öffnung in der Decke des Speisers über der hinteren Kammer vorhanden ist. Die Strahlung durch einen solchen Schlitz von dem darunter liegenden Glasstrom kann durch Paare von zusammenwirkenden, seitlich angelenkten, verschwenkbaren Abdeckungen geregelt werden. Diese Lösung ist aber aufwendig und die Betätigung träge.

Es ist Aufgabe der Erfindung, eine Abdeckung für die Kühlöffnungen der eingangs genannten Kanäle zu schaffen, der die genannten Nachteile nicht mehr anhaften und die es erlaubt, eine größere Kühlfläche als bisher zu verwenden, die flexibler in der Kühlung ist und die eine aufwendige Konstruktion zur Aufhängung und Bewegung der Platten bzw. eine verstärkte Decke überflüssig macht.

Diese Aufgabe wird erfindungsgemäß dadurch gelöst, daß für jede Öffnung zwei Platten vorhanden sind, die im rechten Winkel zur Strömungsrichtung beweglich sind.

Zur Vergrößerung der Öffnungsgrößen können die Öffnungen vorteilhaft einen Längssteg aufweisen, der die zur Mitte hin gerichteten Kanten der Platten unterstützt.

Zur Bewegung der Platten können an ihnen seitliche Zug- bzw. Schubstangen angebracht sein, wobei diese Stangen zum Ausgleich von Winkeländerungen mit den Platten über ein Gelenk verbunden sein können.

Im einzelnen ergibt sich mit Vorteil zur Aufhängung und Bewegung der Platten eine Konstruktion mit quer verlaufenden Tragschienen, auf denen Laufkatzen bewegbar sind, an denen die Platten mittels Anker angehängt sind.

Ein besonders einfacher Aufbau des erfindungsgemäßen Kanals ergibt sich durch eine Aufteilung in in Längsrichtung aufeinanderfolgende gleiche Module und um auch eine einseitige Kühlung zu ermöglichen, können zusammengehörige Platten betrennt voneinander steuerbar sein, so daß es z.B. möglich ist, in Längsrichtung aufeinanderfolgend nur rechte oder linke Öffnungsseiten zu öffnen bzw. geschlossen zu halten.

Vorteilhaft kann die Verwendung der erfindungsgemäßen zwei nebeneinanderliegender Platten auch in Kombination mit der Verwendung der bekannten längs verfahrbaren Platten erfolgen und eine Anwendung ist auch dort an Vorherden möglich, wo diese abdeckbare Kühlöffnungen aufweisen.

Im folgenden wird ein Ausführungsbeispiel der Erfindung anhand von Zeichnungen näher beschrieben. Es zeigen:

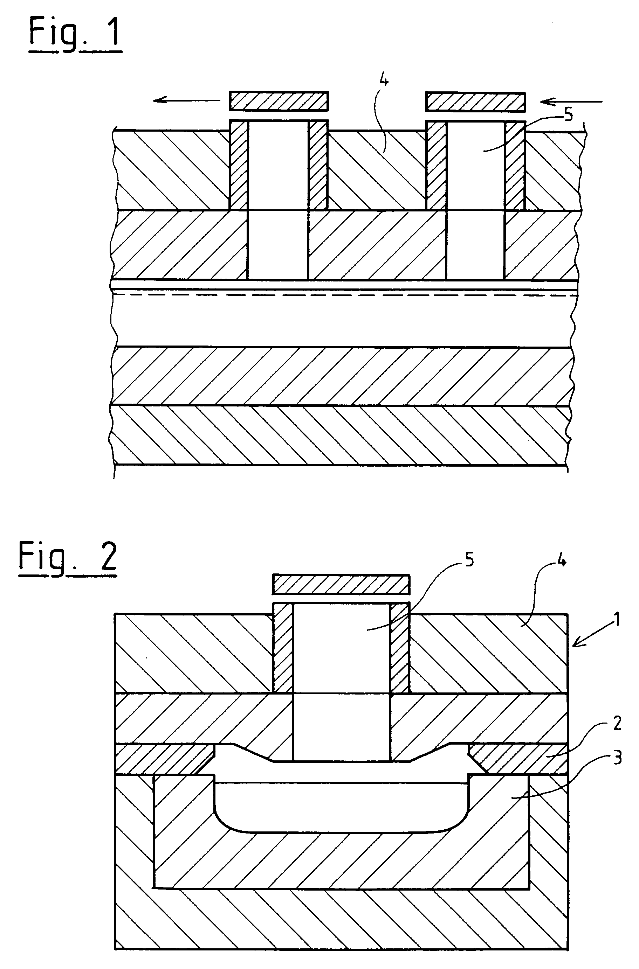

- Figur 1: die bisherige Form der Plattenbewegung in Längsrichtung eines Speisers,
- Figur 2: einen Querschnitt durch den Speiser gemäß Figur 1,

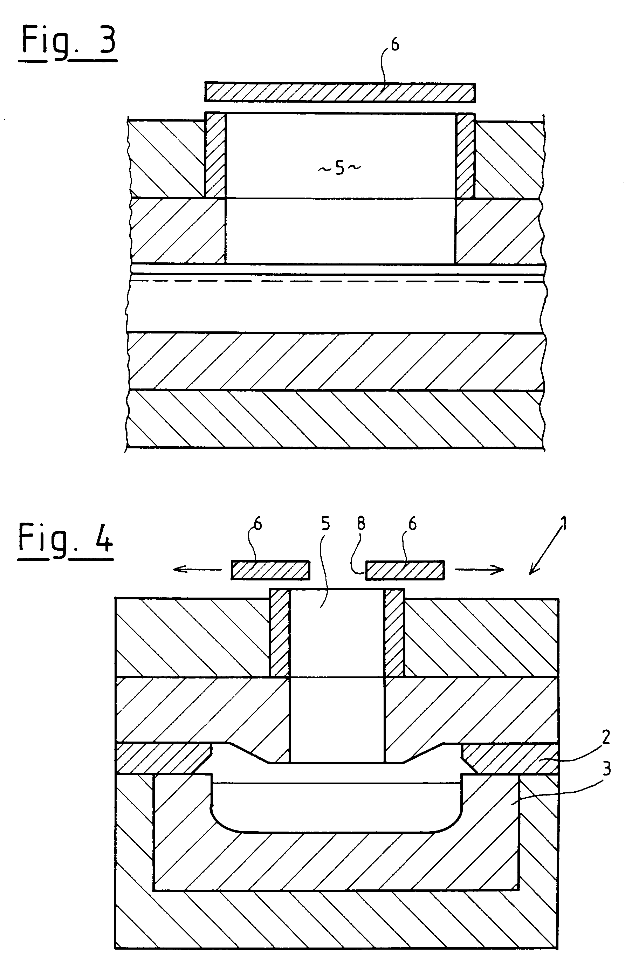

- Figur 3: einen schematischen Längsschnitt durch einen Speiser gemäß der Erfindung,

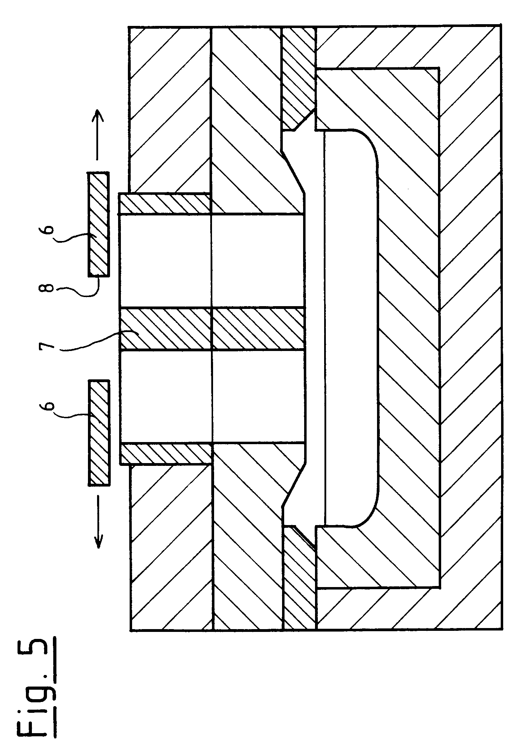

- Figur 4: einen Querschnitt durch einen Speiser gemäß Figur 3,
- Figur 5: einen Querschnitt durch einen Speiser mit Öffnungsmittelsteg und
- Figur 6: einen Querschnitt durch die Mechanik eines erfindungsgemäßen Speisers.

Der allgemein mit 1 bezeichnete Kanal für die Temperatureinstellung eines Stromes schmelzbarer Materialien, insbesondere Glas oder keramische Materialien, ist allgemein mit 1 bezeichnet. Er besitzt längsverlaufende Seitenwände 3, einen nicht näher bezeichneten Boden und eine Decke 4 mit Kühlöffnungen 5. Seitlich in den Seitenwänden 3 sind Brenner 2 für die Aufheizung bzw. Beheizung des Schmelzbades vorhanden.

In den Öffnungen 5 können längsverlaufende Stege 7 verlaufen, auf denen die mittige Kante 8 der Platten 6 aufliegen können. Es kann aber auch eine Konstruktion gewählt werden, bei der auch im geschlossenen Zustand die Platten 6 freitragend sind.

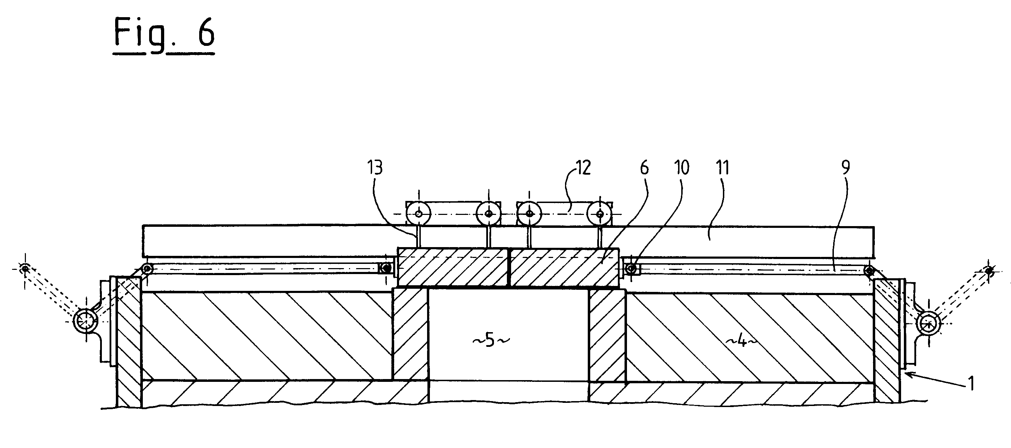

Gemäß der Figur 6 sind an den äußeren Kanten der Platten 6 Zug- bzw. Schubstangen 9 angebracht, die über Gelenke 10 höhenbeweglich sind. Es können durch diese Gelenke 10 Verschiebungen aufgrund von Wärmeausdehnungen ausgeglichen und mechanische Winkeländerungen der Stangen 9 aufgenommen werden.

Über der Decke 4 sind Schienen 11 angeordnet, auf denen Laufkatzen 12 laufen können, die über Anker 13 die Platten 6 halten. Diese Laufkatzen gewährleisten neben einer sicheren Halterung die freie seitliche Bewegung der Platten 6.

Da das erfindungsgemäße System außerordentlich flexibel ist, praktisch beliebig große Kühlflächen ermöglicht und darüber hinaus mechanisch einfach und damit wirtschaftlich ausgebildet ist, kann von einer idealen Lösung der anstehenden Probleme gesprochen werden.

## Patentansprüche

1. Kanal für die Temperatureinstellung eines Stromes schmelzbarer Materialien, insbesondere Glas oder keramische Materialien, wobei die Erwärmung durch in den Seitenwänden angebrachte Brenner und die Abkühlung durch über bewegliche Platten verschließbare Öffnungen in der Decke erfolgt,
**dadurch gekennzeichnet,**
daß für jede Öffnung (5) zwei Platten (6) vorhanden sind, die im rechten Winkel zur Strömungsrichtung beweglich sind.

2. Kanal nach Anspruch 1, dadurch gekennzeichnet, daß die Öffnungen (5) einen Längssteg (7) aufweisen, der die zur Mitte hin gerichteten Kanten (8) der Platten (6) unterstützt.

3. Kanal nach Anspruch 1 oder 2, dadurch gekennzeichnet, daß an den Platten (6) zu ihrer Bewegung seitliche Zug- bzw. Schubstangen (9) angebracht sind.

4. Kanal nach dem Anspruch 3, dadurch gekennzeichnet, daß die Stangen (9) mit den Platten (6) über ein Gelenk (10) verbunden sind.

5. Kanal nach einem der Ansprüche 1 bis 4, dadurch gekennzeichnet, daß quer verlaufende Tragschienen (11) vorhanden sind, auf denen Laufkatzen (12) bewegbar sind, an denen die Platten (6) mittels Anker (13) angehängt sind.

6. Kanal nach einem der Ansprüche 1 bis 5, gekennzeichnet durch eine Aufteilung des Kanals in in Längsrichtung aufeinander folgende gleiche Module.

7. Kanal nach einem der Ansprüche 1 bis 6, dadurch gekennzeichnet, daß zusammengehörige Platten (6) getrennt voneinander steuerbar sind.

## Claims

1. A channel for regulating the temperature of a current of meltable material, particularly glass or ceramic materials wherein the heating is achieved by burners provided in the side walls, and the cooling is achieved by apertures in the ceiling closable by movable slabs,
**characterized in**
that two slabs (6) are provided for each aperture (5) with the slabs movable rectangularly in relation to the flow direction.

2. Channel as claimed in claim 1, characterized in that the apertures (5) comprise a longitudinal web (7) supporting the edges (8) of the slabs (6) pointing towards the middle.

3. Channel as claimed in claim 1 or 2, characterized in that lateral push rods or pull rods (9), respectively, are attached at the slabs (6) for the movement thereof.

4. Channel as claimed in claim 3, characterized in that the rods (9) are connected with the slabs (6) by means of a joint (10).

5. Channel as claimed in one of the claims 1 to 4, characterized in that supporting rails (11) extending transversely are provided whereupon travellers (12) are movable whereat the slabs (6) are attached by means of tie elements (13).

6. Channel as claimed in one of the claims 1 to 5, characterized by a division of the channel in equal modules successively arranged in longitudinal direction.

7. Channel as claimed in one of the claims 1 to 6, characterized in that matching slabs (6) are individually controllable.

## Revendications

1. Canal pour le réglage de la température d'un courant de matériaux fusibles, en particulier de matériaux vitreux ou céramiques, le réchauffement étant réalisé par des brûleurs disposés dans les parois latérales et le refroidissement étant réalisé par l'intermédiaire d'ouvertures ménagées dans le couvercle et susceptibles d'être obturées par des plaques mobiles, caractérisé en ce que, pour chaque ouverture (5), sont prévues deux plaques (6) qui sont mobiles à angle droit par rapport à la direction d'écoulement.

2. Canal selon la revendication 1, caractérisé en ce que les ouvertures (5) comportent une barrette longitudinale (7) qui supporte les bords (8) des plaques (6), dirigés vers le milieu.

3. Canal selon la revendication 1 ou 2, caractérisé en ce que des biellettes latérales de traction ou de poussée (9) sont montées sur les plaques (6) pour permettre leur déplacement.

4. Canal selon la revendication 3, caractérisé en ce que les biellettes (9) sont reliées aux plaques (6) par une articulation (10).

5. Canal selon l'une des revendications 1 à 4, caractérisé en ce qu'il comporte des rails de support (11) courant transversalement et sur lesquels sont susceptibles de se déplacer des chariots roulants (12) auxquels sont suspendus les plaques (6) par l'intermédiaire de tirants d'accrochage (13).

6. Canal selon l'une des revendications 1 à 5, caractérisé par une subdivision du canal en modules identiques se suivant les uns les autres dans la direction longitudinale.

7. Canal selon l'une des revendications 1 à 6, caractérisé en ce que des plaques allant de pair (6) sont susceptibles d'être commandées séparément l'une de l'autre.
